# EUROPEAN PATENT APPLICATION

(11) **EP 2 685 413 A1**
(43) Date of publication of application: **15.01.2014**
(21) Application number: 12837346.1
(22) Date of filing: 25.09.2012
(51) Int. Cl.: G06Q 20/36, G06F 17/30, G06Q 10/00, G06Q 20/00

(54) **PORTABLE TERMINAL AND OPTIMIZED PRIORITY ORDER GENERATION METHOD**

(30) Priority: 26.09.2011 JP 2011209129
(71) Applicant: NTT DOCOMO, INC., Chiyoda-ku, Tokyo 100-6150 (JP)
(72) Inventor: YAMAGUCHI, Kumiko, Tokyo 100-6150 (JP); YOSHIKAWA, Kunio, Tokyo 100-6150 (JP); AKIYAMA, Tomohiro, Tokyo 100-6150 (JP); TANNO, Tetsuhiro, Tokyo 100-6150 (JP); SASAGAWA, Tetsuhiro, Tokyo 100-6150 (JP)
(74) Representative: MERH-IP Matias Erny Reichl Hoffmann
(86) International application number: PCT/JP2012/074534
(87) International publication number: WO 2013/047504

(57) **Abstract**

A portable terminal that can centrally determine payment priorities for all services in a portable terminal is provided. This portable terminal 10 has a total of two or more secure elements (referred to below as SEs) in either of both of a removable media and the portable terminal. The portable terminal 10 includes a base-band section 14 having a card search section 14a that searches the removable media connected to the portable terminal 10, a priority storing section 14b that stores priorities that centrally control all services in the two or more SEs, an optimum priority generation section 14c that excludes the priorities of the services in the removable media that are not searched for from the stored priorities, rearranges the priories of services that are not excluded from highest to lowest, and generates the rearranged priorities as optimum priorities, and a radio frequency section 12 having an optimum priority storing section 12a that stores the generated optimum priorities.

## Description

### [TECHNICAL FIELD]

The present invention relates to a portable terminal that generates priorities used when payment is performed with services (electronic money applications) in secure elements in the portable terminal and to an optimum priority generation method.

### [BACKGROUND ART]

Recently, an IC chip in a portable terminal includes the electronic money applications of a plurality of electronic money business operators, so that various types of electronic money can be used in one portable terminal. When an IC chip in a portable terminal includes a plurality of electronic money applications, the user uses electronic money, for example, as described below. First, the user brings the portable terminal close to the reader/writer of an electronic money terminal installed in the accounting area of a shop. Next, the electronic money terminal accesses the IC chip through an operation by the shop assistant in charge of accounting and searches for electronic money applications in the IC chip. Service codes for identifying applications are set in the applications installed in the IC chip. The electronic money terminal reads service codes through a process called a service search and recognizes the electronic money applications installed in the IC chip. When a single electronic money application is installed in the IC chip, the electronic money terminal performs payment using this application. When a plurality of electronic money applications are installed in the IC chip, the electronic money terminal displays these applications on the display device to ask for an instruction for specifying the application to be used. That is, the shop assistant in charge of accounting asks the user, for example, "Either the electronic money of company A or the electronic money of company B are available. Which do you select?". Then, the user answers, for example, "I use company A". The shop assistant in charge of accounting operates the electronic money terminal to process payment with electronic money of company A using the electronic money application of company A. In this case, a problem with a conventional electronic money terminal is that the user may find it difficult to select which electronic money to use for payment.

On the other hand, a payment apparatus (electronic money terminal) in patent literature 1 searches for an electronic money applications in an IC chip disposed in a portable terminal or IC card to grasp individual electronic money applications, sets priorities used to perform payment using the electronic money applications, and sequentially accesses the electronic money applications installed in the IC chip according to the priorities so that the total of payment reaches the entire amount. If the user sets the priorities in advance and stores them in the IC chip, the payment apparatus reads the user-specified priorities, sequentially accesses the electronic money applications according to the priorities, and performs payment.

### [PRIOR ART LITERATURE]

### [PATENT LITERATURE]

[Patent literature 1] Japanese Patent Application Laid Open No. 2009-176065

### [SUMMARY OF THE INVENTION]

### [PROBLEMS TO BE SOLVED BY THE INVENTION]

Conventionally, since the remaining amount of electronic money was recorded in the IC chip in a portable terminal, when changing model of the portable terminal, the user needed to move the electronic money service stored in the IC chip in the old portable terminal to the IC chip in a new portable terminal. In this case, it was necessary for the user to move the electronic money service through an operation at the distributor shop of the portable terminal or through individual procedures at a retail store, railroad company, etc. On the other hand, some telecommunications carriers adopt a system for recording data in the SIM card so that data such as the remaining amount of electronic money can be easily moved to a new portable terminal during changing of the model. Accordingly, the user can move electronic money only by replacing the SIM card, thereby making the change of model easier. A change in the recording system will be made together with switching to NFC (Near Field Communication), which is a future standard for electronic money. NFC is a technology for incorporating a non-contact IC chip in a portable terminal to reader/writer. NFC conforms to Type A and Type B, which are international standards of non-contact IC cards, FeliCa, and some IC tags.

In response to this situation, in an NFC-compliant portable terminal, a secure element (secure area having the core section of an IC chip including security, encryption functions, key management functions, etc., referred to below as SE) may be incorporated in a built-in chip of a portable terminal (built-in SE), may be incorporated in a SIM card or UIM card, or may be incorporated in an external card memory. Accordingly, it is considered that a certain portable terminal has a plurality of SEs, for example, in a built-in SE and a SE in a SIM card.

In this case, a payment apparatus disclosed in patent literature laccesses a predetermined SE (for example, the built-in SE) in a portable terminal and performs payment by accessing electronic money applications according to the priorities set for the SE, so the electronic money applications in the SE (for example, the SE in a SIM card) that were not accessed are not used. Accordingly, a problem is that the user can use only the electronic money applications in the predetermined SE, thereby compromising the user's convenience. Accordingly, the present invention addresses the problem with the object of providing a portable terminal that can centrally determine the payment priorities of all services (electronic money applications) in the portable terminal.

### [MEANS TO SOLVE THE PROBLEMS]

A portable terminal according to the present invention, having a total of two or more SEs in either or both of removable media and the portable terminal, includes a base-band section and a radio frequency section. The base-band section includes a card search section, a priority storing section, and an optimum priority generation section. The radio frequency section includes an optimum priority storing section.

The card search section searches the removable media connected to the portable terminal. The priority storing section stores priorities that centrally control all services in the two or more SEs. The optimum priority generation section excludes priorities of services in removable media that are not searched for from the stored priorities, rearranges priories of services that are not excluded from highest to lowest, and generates the rearranged priorities as optimum priorities. The optimum priority storing section stores the generated optimum priorities.

### [EFFECTS OF THE INVENTION]

The portable terminal according to the present invention can centrally determine the payment priorities of all services (electronic money applications) in the portable terminal.

### [BRIEF DESCRIPTION OF THE DRAWINGS]

Fig. 1 is a diagram illustrating a portable terminal having a SE in each of a portable terminal, a UIM card, and card memories.
Fig. 2 is a diagram illustrating priorities stored by a priority storing section included in portable terminals according to all embodiments.
Fig. 3 is a diagram illustrating an optimum priority generated by an optimum priority generation section included in the portable terminals according to all embodiments.
Fig. 4 is a diagram illustrating a service search screen displayed by a display section included in portable terminals according to third and fourth embodiments.
Fig. 5 is a diagram illustrating a priority setting screen displayed by the display section included in portable terminals according to the third and fourth embodiments.
Fig. 6 is a block diagram showing the structure of a portable terminal according to a first embodiment.
Fig. 7 is a flowchart showing the operation of the portable terminal according to the first embodiment.
Fig. 8 is a block diagram showing the structure of a portable terminal according to a first modification.
Fig. 9 is a flowchart showing the operation of the portable terminal according to the first modification.
Fig. 10 is a block diagram showing the structure of a portable terminal according to a second embodiment.
Fig. 11 is a flowchart showing the operation of the portable terminal according to the second embodiment.
Fig. 12 is a block diagram showing the structure of a portable terminal according to a third embodiment.
Fig. 13 is a flowchart showing the operation of the portable terminal according to the third embodiment.
Fig. 14 is a block diagram showing the structure of a portable terminal according to a fourth embodiment.
Fig. 15 is a flowchart showing the operation of the portable terminal according to the fourth embodiment.

### [DETAILED DESCRIPTION OF THE EMBODIMENTS]

Embodiments according to the present invention will be described below. The components with the same function are given the same reference number to omit duplicated description.

### [Description of terms]

### <Built-in SE>

In this specification, when a secure element (SE) is incorporated in a built-in chip of a portable terminal, the SE is called a built-in SE, which is distinguished from a SE in a removable medium.

### <Removable medium>

Generally, a removable medium is a recording medium that can be easily removed from the main body. However, in this specification, media in general (SIM card, UIM card, card memory, etc.) that can be attached to or detached from a portable terminal are called removable media.

### <Service>

Applications in general concerning electronic money are called services in this specification.

### [End of description of terms]

### <Example of a portable terminal having two or more SEs according to the present invention>

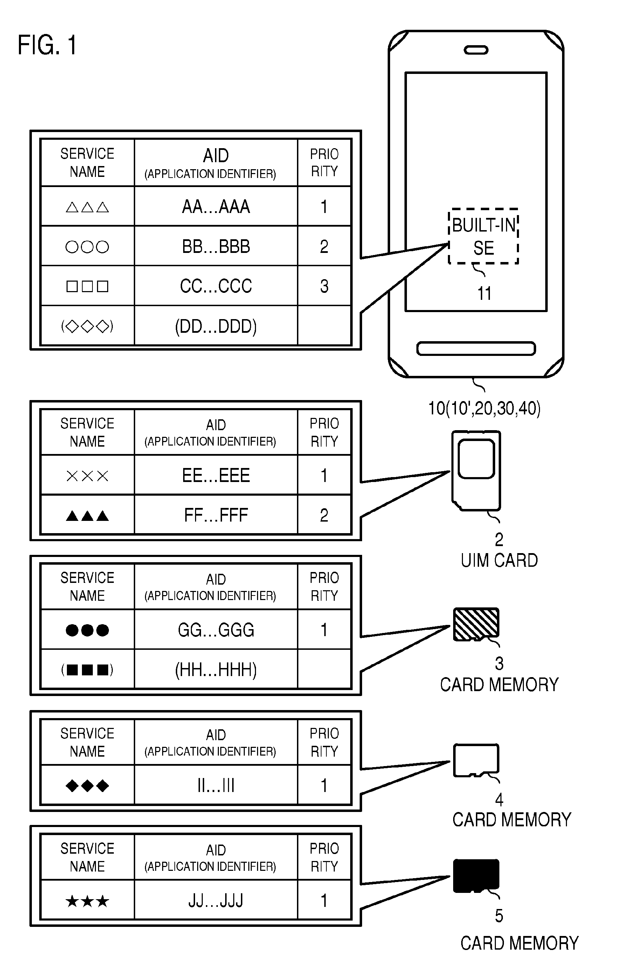

Next, it is assumed that the user has a plurality of removable media with the SE function and a portable terminal with a built-in SE. In this case, the services included in the SEs will be specifically described with reference to Fig. 1. Fig. 1 is a diagram illustrating a portable terminal having a SE in each of a portable terminal, a UIM card, and card memories. It is assumed that the user has one of portable terminals 10, 10', 20, 30, and 40 described in one of the embodiments in this specification and that the user has a UIM card 2, a card memory 3, a card memory 4, a card memory 5 as detachable removable media with the SE function in the portable terminals 10, 10', 20, 30, and 40. The portable terminals 10, 10', 20, 30, and 40 have a built-in SE 11, which contains four services (with application identifiers of AA ... AAA, BB ... BBB, CC ... CCC, and DD ... DDD) in the example shown in Fig. 1. Although application identifiers of AA ... AAA, BB ... BBB, and CC ... CCC are given priorities in the built-in SE 11, the service to which an application identifier of DD ... DDD is given falls outside the management of priority setting and a priority, which is described later, is not given. The UIM card 2 contains two services (with application identifiers of EE ... EEE and FF ... FFF) shown in Fig. 1 and priorities are given to the two services. The card memory 3 contains two services (with application identifiers of GG ... GGG and HH ... HHH) shown in Fig. 1. Although an application identifier of GG ... GGG is given a priority, the service to which an application identifier of HH ... HHH is given falls outside the management of priority setting and a priority, which is described later, is not given. The card memory 4 contains one service (with an application identifier of II ... III) shown in Fig. 1 and is given a priority. The card memory 5 contains one service (with an application identifier of JJ ... JJJ) shown in Fig. 1 and is given a priority. The built-in SE 11 is not removed from the portable terminals 10, 10', 20, 30, and 40. The UIM card 2 is always attached to the portable terminals 10, 10', 20, 30, and 40 in most cases. On the other hand, the portable terminals 10, 10', 20, 30, and 40 has only one card slot for a card memory, so the user selects only one of the card memories 3, 4, and 5 and attaches it to the portable terminals 10, 10', 20, 30, and 40.

### <Priority storing section 14b>

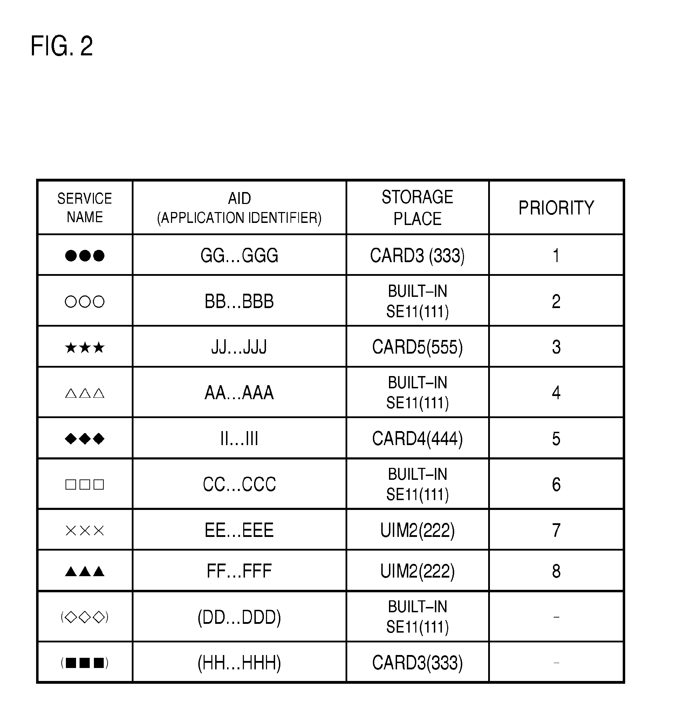

Next, priorities stored by the priority storing section 14b included in the portable terminals 10, 10', 20, 30, and 40 according to all embodiments in this specification, will be described specifically based on the example in Fig. 1 with reference to Fig. 2. Fig. 2 is a diagram illustrating priorities stored by a priority storing section 14b included in portable terminals according to all embodiments. The priority storing section 14b stores priorities that centrally manage all services in the built-in SE of the portable terminal owned by the user and services in the removable media with the SE function. The priorities in priority storing section 14b may be consistent with the priority of each service in the SE. Each priority in the SE may be given when, for example, a service is installed. As shown in, for example, Fig. 2, priorities stored in the priority storing section 14b can be represented as a list of a service name, AID (application identifier), storage place, and priority. Priorities stored in the priority storing section 14b target the removable media that is currently attached by the user, removable media that is not currently attached, but owned by the user, and the built-in SE. In the example in Fig. 2, the card 3 with an AID of GG ... GGG has the first priority, the built-in SE 11 with an AID of BB ... BBB has the second priority, and the card 5 with an AID of JJ ... JJJ has the third priority, and so on. The service with an AID of DD ... DDD and the service with an AID of HH ... HHH are given no priority. Priorities as shown in Fig. 2 may be arbitrarily set by the user using base-band sections 34 and 44 etc. described later or may be automatically set by the portable terminals 10, 10', 20, 30, and 40.

### <Optimum priority generation section 14c and optimum priority storing section 12a>

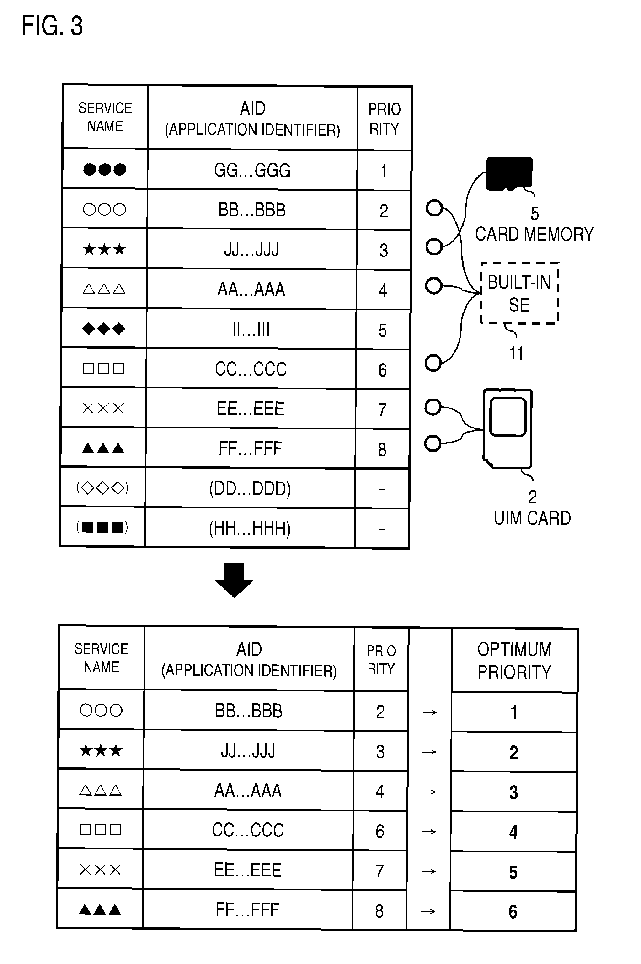

Next, the operation of the optimum priority generation section 14c and the optimum priority storing section 12a included in the portable terminals 10, 10', 20, 30, and 40 according to all embodiments in this specification, will be described specifically based on the example in Fig. 1 with reference to Fig. 3. Fig. 3 is a diagram illustrating optimum priorities generated by the optimum priority generation section 14c included in the portable terminals according to all embodiments.

The optimum priority generation section 14c is present in base-band sections 14, 14', 24, 34, and 44 of the portable terminals 10, 10', 20, 30, and 40, respectively. The optimum priority storing section 12a is present in radio frequency sections 12, 12, 22, 12, and 22 of the portable terminals 10, 10', 20, 30, and 40, respectively. The optimum priority generation section 14c extracts the priorities of services in the removable media and the built-in SE connected to the portable terminal from priorities (first to eighth priorities) that centrally control all services in the built-in SE 11, the UIM card 2, the card memories 3, 4, and 5 stored in the priority storing section 14b (that is, the services in the removable media not connected to the portable terminal are excluded). In this case, it is assumed that the UIM card 2 and the card memory 5 are connected to the portable terminals 10, 10', 20, 30, and 40. Accordingly, the services (with AIDs of EE ... EEE and FF ... FFF) in the UIM card 2, the service (with an AID of JJ ... JJJ) in the card memory 5, and the services (with AIDs of AA ... AAA, BB ... BBB, and CC ... CCC) in the built-in SE 11 are extracted. That is, the services with the second, third, fourth, sixth, seventh, and eighth priorities are extracted. Then, the optimum priority generation section 14c rearranges the extracted services from highest to lowest and newly assigns optimum priorities beginning with the first one (SS14c). The optimum priorities generated in this way are stored in the optimum priority storing section 12a, which is also present in the radio frequency section 12 (SS12a). As described above, the optimum priority generation section 14c generates optimum priorities and stores them in the optimum priority storing section 12a in the radio frequency section 12 (22), so that a reader/writer reads the stored optimum priorities and can execute payment for the services that the reader/writer supports in decreasing order of priorities.

### <Base-band sections 34 and 44>

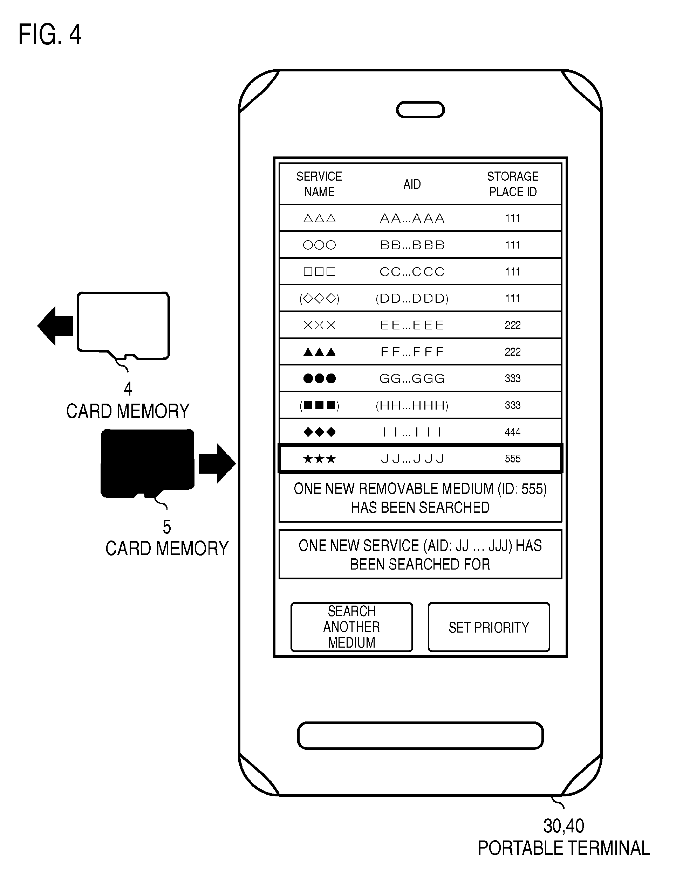

Next, the operation of the base-band sections 34 and 44 included in the portable terminals 30 and 40 according to the third and fourth embodiments of the present invention will be described specifically based on the example in Fig. 1. The base-band sections 34 and 44 included in the portable terminals 30 and 40 according to the third and fourth embodiments of the present invention have structures required for the user to manually set priorities. The base-band sections 34 and 44 include a control section 34a, a service search section 34b, a service list storing section 34c, a display section 34d, and a rearranging section 34e. A "service search mode", which is one of the specific operation of the base-band section 34 and 44, will be described with reference to Fig. 4. Fig. 4 is a diagram illustrating a service search screen displayed by a display section 34d included in portable terminals 30 and 40 according to third and fourth embodiments. For example, the "service search mode" is executed as described below. Only when the service list storing section 34c of the portable terminals 30 and 40 do not store a service list yet, the control section 34a displays "Do you search the terminal and removable media for services? (Yes/No)" on the display screen of the portable terminals 30 and 40 by controlling the display section 34d. When the user clicks the position corresponding to "Yes" by pressing the touch panel of the portable terminals 30 and 40, the portable terminals 30 and 40 enter the service search mode. The control section 34a outputs a card search signal to a card search section 14a' (24a), which will be described later, in response to a user input "Yes (card search command)" from the touch panel (N in SS34a-2, Y in SS34a-1). When receiving the card search signal from the control section 34a (N in SS34a-2, Y in SS34a-1), the card search section 14a' (24a) searches removable media connected to the portable terminals 30 and 40 (SS14a' (SS24a)). The example in Fig. 4 assumes that the UIM card 2 is always connected to the portable terminals 30 and 40, and the card memories 3, 4 and 5 are inserted into the card slot of the portable terminals 30 and 40 in turn in this order to search for individual services. Fig. 4 indicates the moment at which the user makes a change from the card memory 4, which was connected just before the state shown in the figure, to the card memory 5. When the user input (card search command) is issued in this case, a card search signal is output from the control section 34a, and the card search section 14a' (24a) that received the card search signal newly searches the card memory 5 (with an ID of 555). For example, as shown in Fig. 4, the display section 34d may display "ONE NEW REMOVABLE MEDIUM (ID: 555) HAS BEEN SEARCHED" for the card memory 5 (with an ID of 555) newly searched by the card search section 14a' (24a). Next, the service search section 34b searches the removable media and SEs in the portable terminal for services (SS34b). In the example in Fig. 4, service * * * (with an AID of JJ ... JJJ) in the newly inserted card memory 5 is newly searched for. In this case, the display section 34d may display "ONE NEW SERVICE (AID: JJ ... JJJ) HAS BEEN SEARCHED FOR" for service * * * searched for by the service search section 34b. Next, the service list storing section 34c stores a list of searched services as a service list (SS34c). Fig. 4 indicates the moment at which the user makes a change from the card memory 4, which was connected just before, to the card memory 5. Accordingly, service ◆◆◆ (with an AID of II ... III), which has been already searched for and stored as a service in the card memory 4, are not searched for during another search after a change from the card memory 4 to the card memory 5. Even in this case, the service list storing section 34c retains, in a service list, the services (such as service ◆◆◆), having been already searched for and stored, that have not been searched for during another search. As described above, the services in the cards, connected to the portable terminals 30 and 40 in the past, that have been searched for by the service search section 34b are accumulated in sequence in the service list storing section 34c. Next, the display section 34d displays a list of services for which priorities can be set of a list of stored services (SS34d). The example in Fig. 4 assumes that the UIM card 2 is always connected, the card memories 3, 4, and 5 are inserted into the card slot in turn in this order, individual services are searched for, and the searched services are accumulated and stored in the service list storing section 34c in sequence. Upon completion of a service search after insertion of the card memory 5, a service list displayed by the display section 34d includes all the services in the built-in SE 11 (with an ID of 111), the UIM card 2 (with an ID of 222), the card memory 3 (with an ID of 333), the card memory 4 (with an ID of 444), and the card memory 5 (with an ID of 555) for which priorities can be set (in Fig. 4, these services are displayed on an upper part of the display screen of the portable terminals 30 and 40). As shown in Fig. 4, the last searched service (service ★★★ in the card memory 5) may be surrounded by a thick line so that the user can easily recognize. If the user has removable media for which a service search has not been executed, the user only needs to click the part of the touch panel corresponding to the "SEARCH ANOTHER MEDIUM" icon displayed by the display section 34d after connecting the removable media to the portable terminals 30 and 40. In this case, each time the user clicks (issues a card search command) this icon, the control section 34a outputs a card search signal to the card search section 14a' (24a) (N in SS34a-2, Y in SS34a-1). After making the portable terminals 30 and 40 search for all services in the user's removable media, the user clicks the part of the touch panel corresponding to the "SET PRIORITY" icon to make the portable terminals 30 and 40 enter the priority setting mode described later.

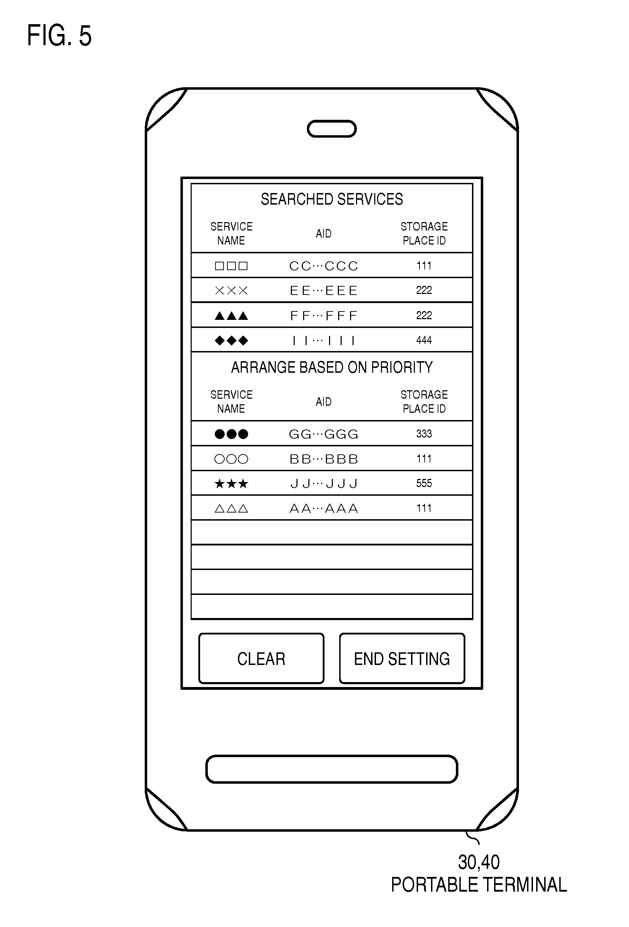

The priority setting mode, which is one of specific operation of the base-band sections 34 and 44, will be described below with reference to Fig. 5. Fig. 5 is a diagram illustrating a priority setting screen displayed by the display section 34d included in portable terminals 30 and 40 according to the third and fourth embodiments. For example, the "priority setting mode" is executed as described below. First, of the service list described above, only the services for which priorities can be set are displayed in the "Searched services" field of the display screen of the portable terminals 30 and 40. In the example in Fig. 5, the "Searched services" field appears in an upper part of the display screen of the portable terminals 30 and 40. In the example in Fig. 5, the display section 34d displays the "Arrange based on priority" field below the "Searched services" field. The user can set the priorities by dragging and dropping services in the "Searched services" field to the position corresponding to the desired priority in the "Arrange based on priority" field. After setting the priorities, the user ends the "priority setting mode" by, for example, clicking the "END SETTING" icon in a lower part of the display screen of the portable terminals 30 and 40. The user's depression of the "End setting" icon is input to the control section 34a as a priority setting command. When receiving the priority setting command, the control section 34a outputs a priority setting signal to the rearranging section 34e (N in SS34a-1, Y in SS34a-2). The priority setting signal reports the order of services rearranged by the user. When receiving the priority setting signal from the control section 34a, the rearranging section 34e rearranges the services in a service list stored in the service list storing section 34c according to the priority setting signal and sets the rearranged order as priorities (SS34e). At this time, the rearranging section 34e may reset the priority for each SE held by each SE from highest to lowest, concurrently with the setting of priorities. The priority storing section 14b stores the priorities set by the rearranging section 34e (SS14b). As described above, the display section 34d of the base-band section 34 displays the items required for the user to manually set priorities on the display screen of the portable terminals 30 and 40 and the priority storing section 14b stores the priories manually set by the user, so the user's desired priorities can be easily set.

### [First embodiment]

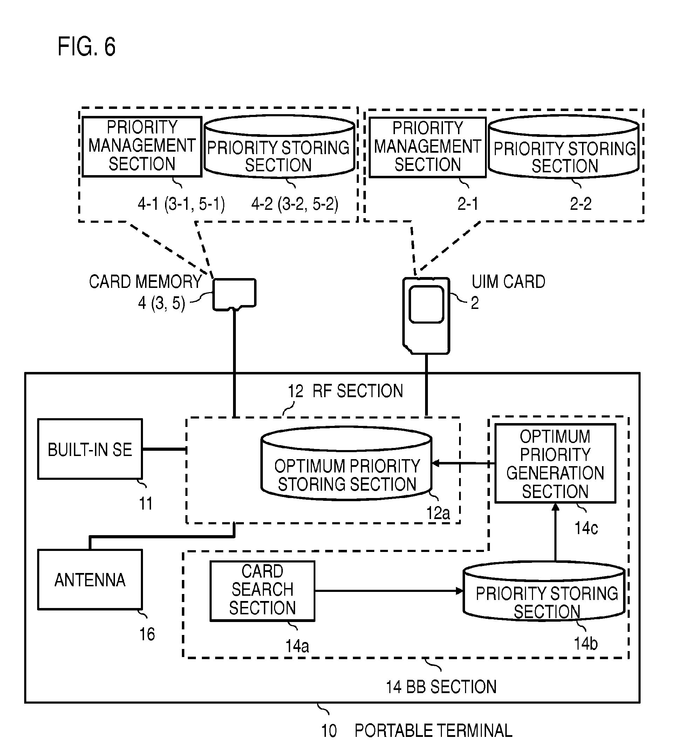

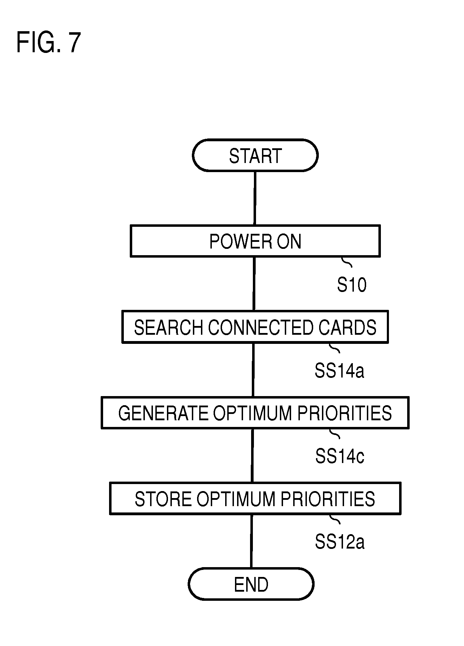

Assuming the above description, a portable terminal according to the first embodiment will be described with reference to Figs. 6 and 7. Fig. 6 is a block diagram showing the structure of the portable terminal 10 according to this embodiment. Fig. 7 is a flowchart showing the operation of the portable terminal 10 according to this embodiment. The portable terminal 10 according to this embodiment includes the built-in SE 11, the radio frequency section 12, the base-band section 14, and an antenna 16 and is connected to removable media such as card memories and UIM cards. In Fig. 6, the portable terminal 10 is connected to the card memory 4 and the UIM card 2 for simplicity, but the removable media that can be connected to the portable terminal 10 according to this embodiment are not limited by this figure (this is the same as in all embodiments and modifications to be described later). The base-band section 14 includes a card search section 14a, the priority storing section 14b, and the optimum priority generation section 14c. The radio frequency section 12 includes the optimum priority storing section 12a. The UIM card 2 incorporates a priority management section 2-1 and a priority storing section 2-2. Similarly, the card memory 4 (3, 5) includes a priority management section 4-1 (3-1, 5-1) and a priority storing section 4-2 (3-2, 5-2).

The card search section 14a searches (SS 14a) removable media connected to the portable terminal 10 when the portable terminal 10 is powered on (S10). The priority storing section 14b stores priorities that centrally control all services in two or more SEs in advance. The optimum priority generation section 14c excludes the priorities of the services in the removable media that are not searched from the stored priorities, rearranges the priorities of the services that are not excluded from highest to lowest, and generates the rearranged priorities as optimum priorities (SS14c). The optimum priority storing section 12a stores the generated optimum priorities (SS12a).

### [First modification]

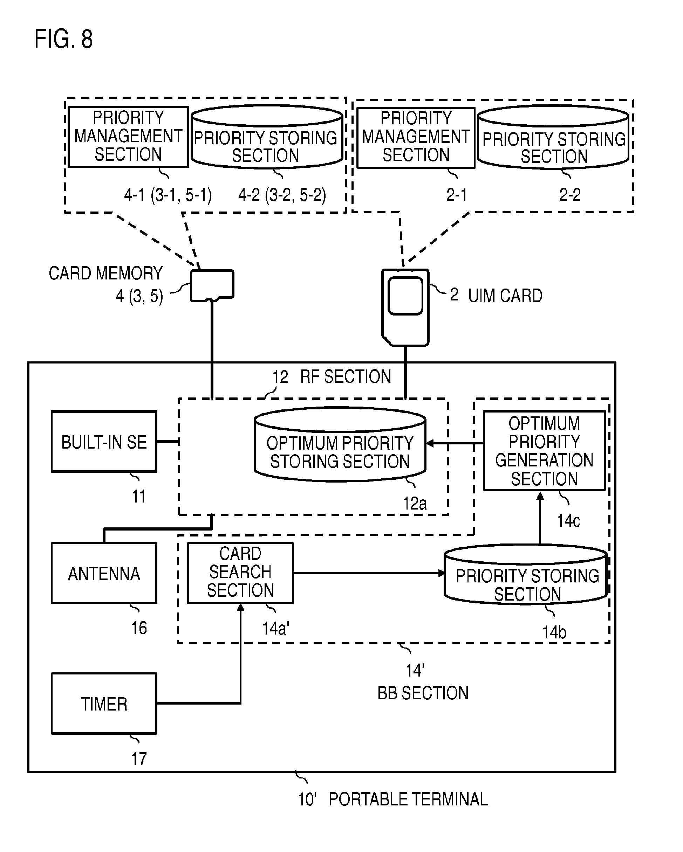

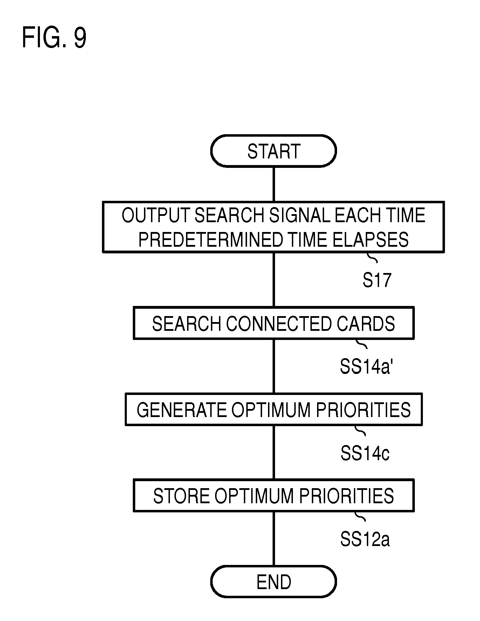

The card search section 14a searches (SS 14a) removable media connected to the portable terminal 10 when the portable terminal 10 is powered on (S10) in the first embodiment, but the operation start conditions of the card search section 14a are not limited to this, and the card search section 14a may start operation each time a certain time elapses. Accordingly, a portable terminal 10' according to a first modification that includes a timer 17 for managing the operation start conditions of the card search section 14a will be described with reference to Figs. 8 and 9. Fig. 8 is a block diagram showing the structure of the portable terminal 10' according to this modification. Fig. 9 is a flowchart showing the operation of the portable terminal 10' according to this modification. The portable terminal 10' according to this modification is different from the portable terminal 10 according to the first embodiment in that the card search section 14a of the base-band section 14 in the portable terminal 10 according to the first embodiment is changed to the card search section 14a' of the base-band section 14' in the portable terminal 10' according to this modification and that the portable terminal 10 according to the first embodiment does not include the timer 17 included in the portable terminal 10' according to this modification.
Accordingly, the components of the portable terminal 10' according to this modification that have the same reference numbers as in the portable terminal 10 according to the first embodiment have the same functions, so the components are not described below.

The timer 17 included in the portable terminal 10' according to this modification manages the operation start condition of the card search section 14a'. More specifically, the timer 17 outputs a card search signal to the card search section 14a' each time a predetermined time elapses (S17). When receiving the card search signal from the timer 17, the card search section 14a' searches the removable media connected to the portable terminal 10'(SS14a'). The subsequent processes are the same as in the portable terminal 10 according to the first embodiment.

As described above, in the portable terminal 10 according to the first embodiment and the portable terminal 10' according to the first modification, the priority storing section 14b stores priorities that centrally control all services in two or more SEs in advance, so the payment priorities of all services (electronic money applications) in the portable terminal 10 (10') can be centrally determined. In addition, since the optimum priority generation section 14c excludes the services in the removable media that are not searched according to the stored priorities when generating optimum priorities, the reader/writer does not access the services in the removable media that are not searched for, in error.

### [Second embodiment]

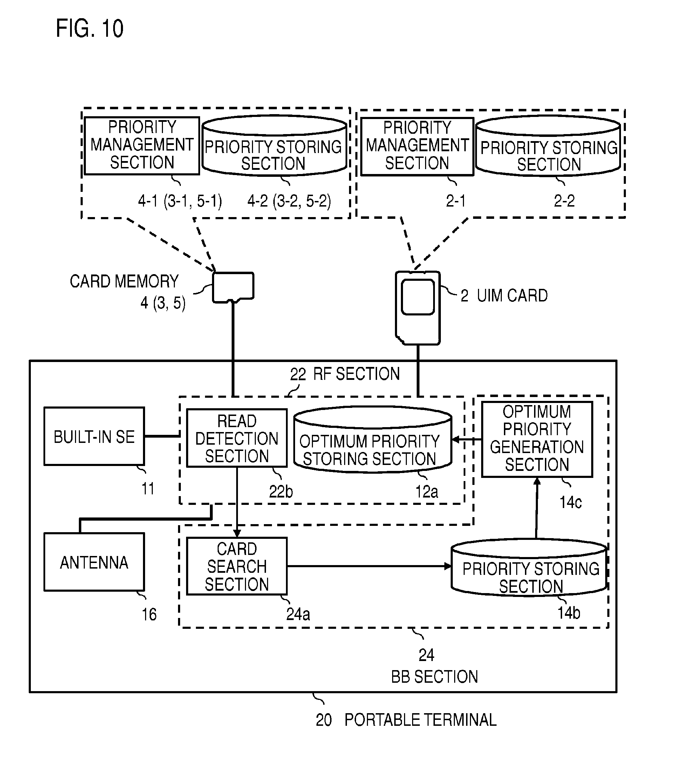

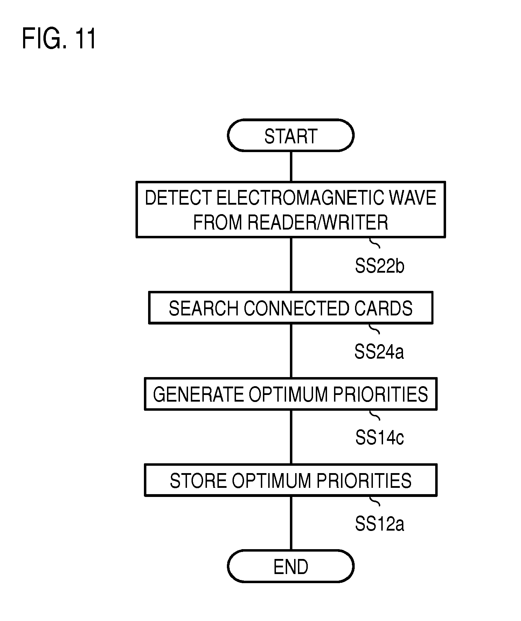

Next, a portable terminal according to a second embodiment for appropriately controlling the removable media search timing of the card search section 14a will be described with reference to Figs. 10 and 11. Fig. 10 is a block diagram showing the structure of the portable terminal 20 according to this embodiment. Fig. 11 is a flowchart showing the operation of the portable terminal 20 according to this embodiment. The portable terminal 20 according to this embodiment includes the built-in SE 11, the radio frequency section 22, the base-band section 24, and an antenna 16 and is connected to removable media such as card memories and UIM cards. The base-band section 24 includes a card search section 24a, the priority storing section 14b, and the optimum priority generation section 14c. The radio frequency section 22 includes the optimum priority storing section 12a and a read detection section 22b. The portable terminal 20 according to this embodiment is different from the portable terminal 10 according to the first embodiment in that the radio frequency section 12 in the portable terminal 10 according to the first embodiment is changed to the radio frequency section 22 in the portable terminal 20 according to this embodiment, that the card search section 14a in the portable terminal 10 according to the first embodiment is changed to the card search section 24a in the portable terminal 20 according to this embodiment, and that the corresponding radio frequency section in the portable terminal 10 according to the first embodiment does not include the read detection section 22b included in the radio frequency section 22 in the portable terminal 20 according to this embodiment. Accordingly, the components of the portable terminal 20 according to this embodiment that have the same reference numbers as in the portable terminal 10 according to the first embodiment have the same functions, so the components are not described below.

The read detection section 22b detects electromagnetic waves from the reader/writer and outputs the card search signal (SS22b). When receiving the card search signal, the card search section 24a searches the removable media connected to the portable terminal 20 (SS24a). The subsequent processes are the same as in the portable terminal 10 according to the first embodiment.

As described above, the portable terminal 20 according to this embodiment lets the read detection section 22b detect electromagnetic waves from the reader/writer and outputs the card search signal in addition of effects of the portable terminal 10 according to the first embodiment, so the card search section 24a can search removable media just before a payment process. Accordingly, the payment process can be performed based on optimum priorities even when a removable medium is replaced after power-on.

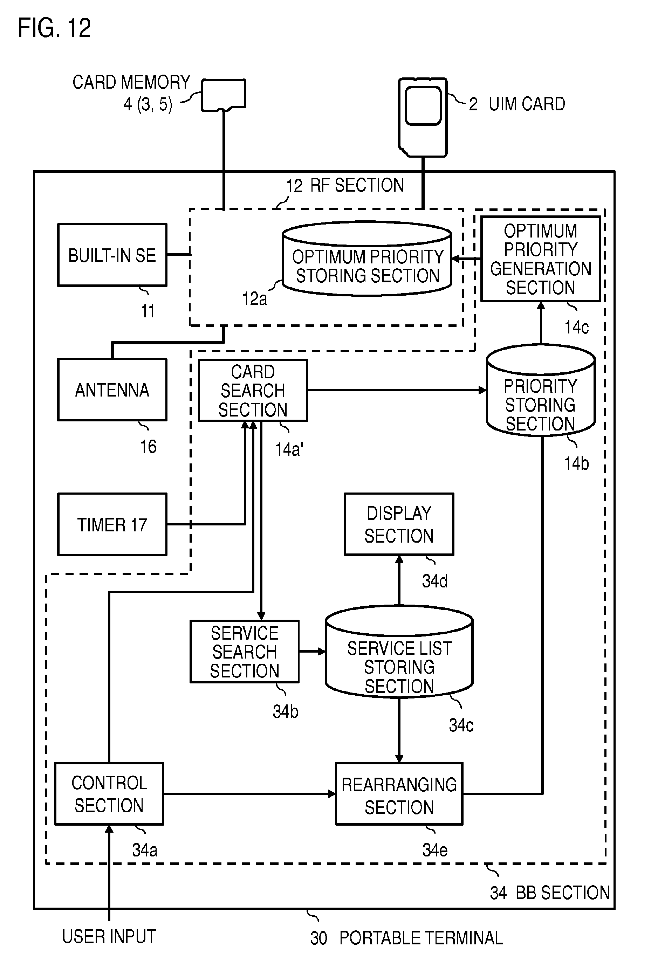

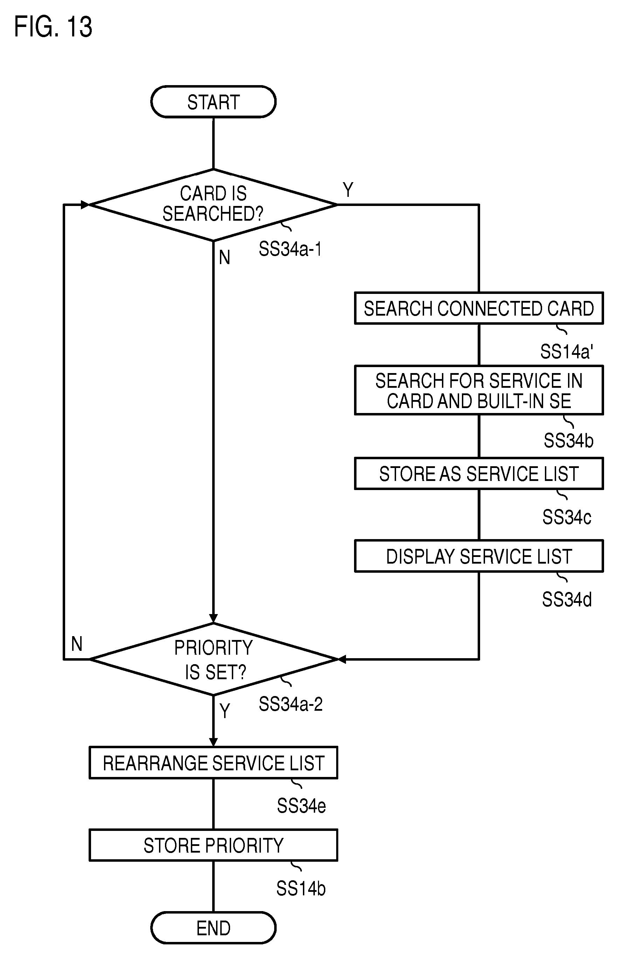

Next, a portable terminal according to a third embodiment, based on the portable terminal 10' according to the first modification, which sets priorities that centrally control all services in the SEs based on the user input, will be described with reference to Figs. 12 and 13. Fig. 12 is a block diagram showing the structure of the portable terminal 30 according to this embodiment. Fig. 13 is a flowchart showing the operation of the portable terminal 30 according to this embodiment. The portable terminal 30 according to this embodiment includes the built-in SE 11, the radio frequency section 12, the base-band section 34, the antenna 16, and the timer 17 and is connected to removable media such as card memories and UIM cards. The base-band section 34 includes the card search section 14a', the priority storing section 14b, the optimum priority generation section 14c, the control section 34a, the service search section 34b, the service list storing section 34c, the display section 34d, and the rearranging section 34e. The radio frequency section 12 includes the optimum priority storing section 12a. The portable terminal 30 according to this embodiment is different from the portable terminal 10' according to the first modification in that the base-band section 14' of the portable terminal 10' according to the first modification does not include the control section 34a, the service search section 34b, the service list storing section 34c, the display section 34d, and the rearranging section 34e of the base-band section 34 included in the portable terminal 30 according to this embodiment. Accordingly, the components of the portable terminal 30 according to this embodiment that have the same reference numbers as in the portable terminal 10' according to this modification have the same functions, so the components are not described below.

Setting of priorities in the portable terminal 30 will be described below. The control section 34a receives the user input. When the user input is a card search command, the control section 34a outputs the card search signal (N in SS34a-2, Y in SS34a-1). When the user input is a priority setting command, the control section 34a outputs the priority setting signal (N in SS34a-1, Y in SS34a-2). When receiving the card search signal from the control section 34a (N in SS34a-2, Y in SS34a-1), the card search section 14a' searches the removable media connected to the portable terminal 30 (SS14a'). The service search section 34b searches for services in the searched removable media and the SEs in the portable terminal (SS34b). The service list storing section 34c stores a list of searched services as a service list (SS34c). If a service that was searched for and stored is not searched for in another search, the service list storing section 34c retains the service in the service list. Next, the display section 34d displays the stored service list on the display screen (SS34d). When receiving the priority setting signal from the control section 34a (N in SS34a-1, Y in SS34a-2), the rearranging section 34e rearranges the services in the stored service list according to the priority setting signal and sets the rearranged order as priorities (SS34e). The priority storing section 14b stores the set priorities (SS14b).

As described above, in the portable terminal 30 according to this embodiment, the base-band section 34 sets priorities that centrally control all services in the two or more SEs so that the priorities appropriately satisfy the user's needs in addition of effects of the portable terminal 10' according to the first modification.

### [Fourth embodiment]

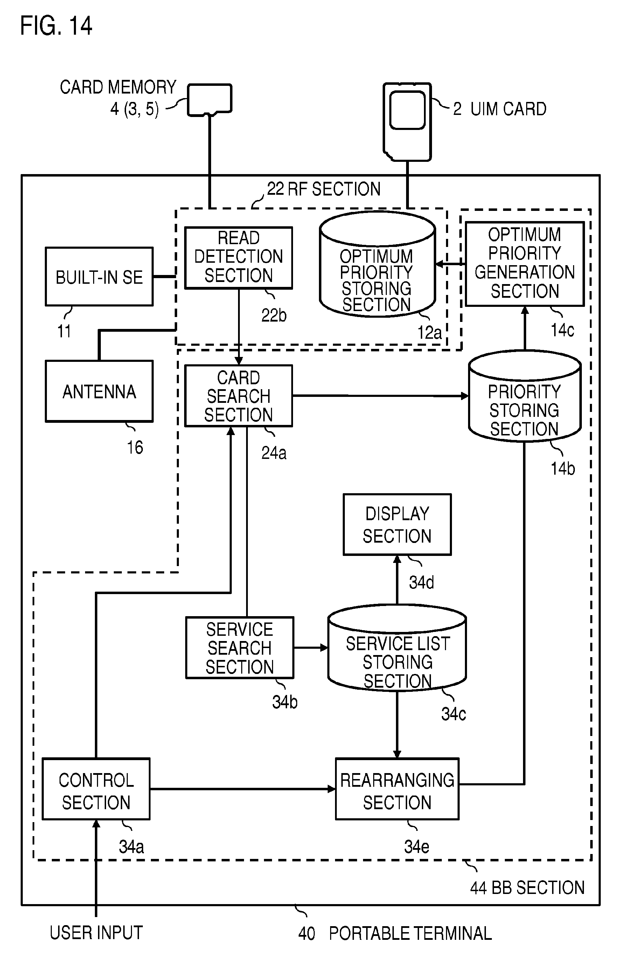

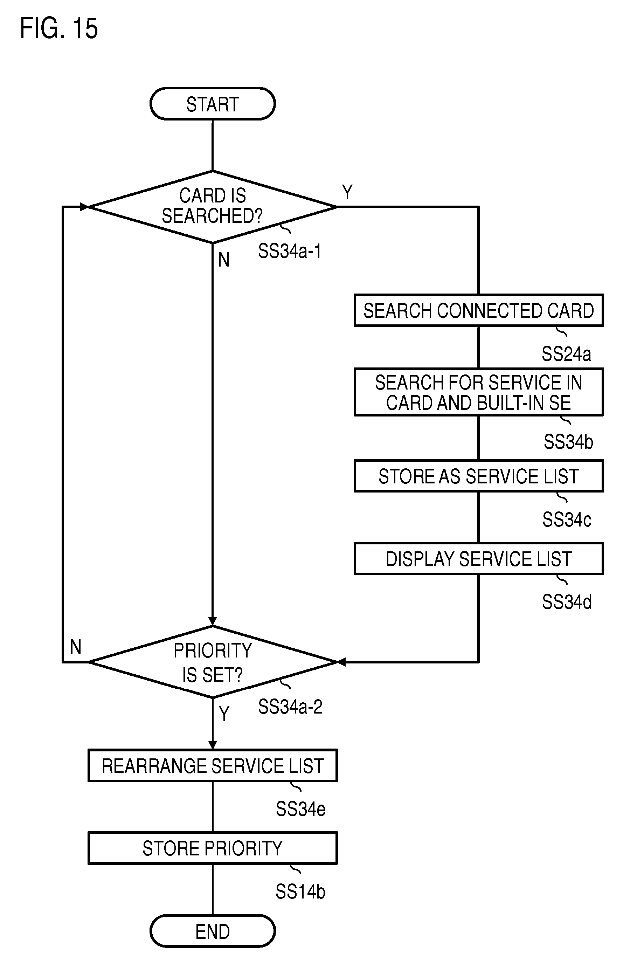

Next, a portable terminal according to a fourth embodiment, based on the portable terminal 20 according to the second embodiment, which sets priorities that centrally control all services in the SEs based on the user input, will be described with reference to Figs. 14 and 15. Fig. 14 is a block diagram showing the structure of the portable terminal 40 according to this embodiment. Fig. 15 is a flowchart showing the operation of the portable terminal 40 according to this embodiment. The portable terminal 40 according to this embodiment includes the built-in SE 11, the radio frequency section 22, a base-band section 44, and the antenna 16 and is connected to removable media such as card memories and UIM cards. The base-band section 44 includes the card search section 24a, the priority storing section 14b, the optimum priority generation section 14c, the control section 34a, the service search section 34b, the service list storing section 34c, the display section 34d, and the rearranging section 34e. The radio frequency section 22 includes the optimum priority storing section 12a and the read detection section 22b. The portable terminal 40 according to this embodiment is different from the portable terminal 20 according to the second embodiment in that the portable terminal 20 according to the second embodiment does not include the control section 34a, the service search section 34b, the service list storing section 34c, the display section 34d, and the rearranging section 34e of the base-band section 44 included in the portable terminal 40 according to this embodiment. Accordingly, refer to the description of the second embodiment for the processes of the same components as in the portable terminal 20. Refer to the description of the third embodiment for the processes of the same components (the control section 34a, the service search section 34b, the service list storing section 34c, the display section 34d, and the rearranging section 34e) as in the portable terminal 30.

As described above, in the portable terminal 40 according to this embodiment, the base-band section 44 sets priorities that centrally control all services in the two or more SEs, so that the priorities appropriately satisfy the user's needs in addition of effects of the portable terminal 20 according to the second embodiment.

This specification shows examples in which, even when the user has two or more removable media for one portable terminal and some of the removable media are attached to the portable terminal and some of them are not attached to it, the services in the removable media not attached to it are excluded so that payment of electronic money can be performed based on the user's desired priorities. However, the portable terminal according to the present invention is not limited to the above purpose and is effective even when, for example, a single removable medium is used by two portable terminals. The portable terminal according to the present invention is effective when, for example, the user (referred to as user A) has two portable phones (referred to as portable terminal A and portable terminal B) and attaches a removable medium (referred to as removable medium 1) to portable terminal A or portable terminal B as necessary. In this case, user A should have set the priorities for the target services in all SEs of portable terminal A according to the present invention including the services in removable medium 1. The priorities in the SE in a removable medium are recorded in the SE, so even when the removable medium is attached to portable terminal B in turn, its priority is retained. When portable terminal B is a portable terminal according to the present invention, the optimum priority is determined in the portable terminal. Even when portable terminal B is not a portable terminal according to the present invention, if the removable medium is specified as one SE in the portable terminal, non-contact communication based on priorities in the SE can be performed.

The above processes may be executed chronologically according to the order of description or may be executed concurrently or individually depending on the processing power of the device that performs the processes or as necessary. Alternatively, it will be clear that the processes may be otherwise executed without departing from the spirit and scope of the invention.

When the above structure is achieved by a computer, the processes by the functions of the individual devices are described in a program. Execution of the program in the computer achieves the above processes on the computer.

A program describing the processes can be recorded in a computer-readable recording medium. The computer-readable recording medium may be any recording medium such as, for example, a magnetic recording device, optical disc, magnetic optical disc, or semiconductor memory.

The delivery of the program is performed by, for example, selling, transferring, leasing portable recording media such as a DVD or CD-ROM containing the program. The program may be stored in the storage device of a server computer and may be transferred by sending it from a server computer to another computer via a network.

For example, the computer that executes such a program first stores the program recorded in the portable recording medium or the program sent from the server computer in its storage device. During execution of the process, the computer reads the program stored in its recording medium and executes the process according to the read program. In another example of execution, the computer may read the program directly from the portable recording medium and may execute the process according to the program. Alternatively, the computer may execute the process according to the program each time the server computer sends the program to the computer. Alternatively, the above process may be executed using so-called ASP (Application Service Provider) services in which the process is achieved by instructing execution and obtaining results without sending the program from the server computer to this computer. The program in this example includes program-like information (such as data, not a direct instruction for a computer, that defines processing by the computer), used for processing by an electronic calculator.

Although this apparatus is configured by execution of a predetermined program in a computer in this example, at least a part of the process may be achieved by hardware.

## Claims

1. A portable terminal that has a total of two or more secure elements in either or both of removable media and a portable terminal, the portable terminal comprising:
a base-band section including
a card search section for searching the removable media connected to the portable terminal,
a priority storing section for storing priorities that centrally control all services in the two or more secure elements, and
an optimum priority generation section that excludes priorities of services in removable media that are not searched from the stored priorities, rearranges priories of services that are not excluded from highest to lowest, and generates the rearranged priorities as optimum priorities; and
a radio frequency section that has an optimum priority storing section for storing the generated optimum priorities.

2. The portable terminal according to claim 1, wherein
the radio frequency section further includes a read detection section for detecting electromagnetic waves from a reader/writer and outputting a card search signal and
the card search section searches removable media connected to the portable terminal when receiving the card search signal.

3. The portable terminal according to claim 2, wherein
the base-band section sets priorities that centrally control all services in the two or more secure elements based on a user input and
the priority storing section stores the set priorities.

4. The portable terminal according to claim 3, wherein the base-band section further includes
a control section for outputting the card search signal when the user input is a card search command and outputting a priority setting signal when the user input is a priority setting command,
a service search section for searching for services in the searched removable media or the secure elements in the portable terminal,
a service list storing section for storing a list of the searched services as a service list,
a display section for displaying the stored service list on a display screen, and
a rearranging section for rearranging the searched services in the stored service list based on the priority setting signal when receiving the priority setting signal and setting priorities of the rearranged services,
wherein the service list storing section, when the searched and stored services are not searched for during another search, retains the services that are not searched for in the service list.

5. An optimum priority generation method using a portable terminal that has a total of two or more secure elements in either or both of removable media and a portable terminal, the method comprising:
a base-band step including
a card search sub-step for searching removable media connected to the portable terminal,
a priority storing sub-step for storing priorities that centrally control all services in the two or more secure elements, and
an optimum priority generation sub-step for excluding priorities of services in removable media that are not searched for from the stored priorities, rearranging priorities of services that are not excluded from highest to lowest, and generating the rearranged priorities as optimum priorities and
a radio frequency step including an optimum priority storing sub-step for storing the generated optimum priorities.

6. The optimum priority generation method according to claim 5, wherein
the radio frequency step further includes a read detection sub-step for detecting electromagnetic waves from a reader/writer and outputting a card search signal and
the card search sub-step searches removable media connected to the portable terminal when receiving the card search signal.

7. The optimum priority generation method according to claim 6, wherein
the base-band step sets priorities that centrally control all services in the two or more secure elements based on a user input and
the priority storing sub-step stores the set priorities.

8. The optimum priority generation method according to claim 7, wherein the base-band step further includes
a control sub-step for outputting the card search signal when the user input is a card search command and outputting a priority setting signal when the user input is a priority setting command,
a service search sub-step for searching for services in the searched removable media and the secure elements in in the portable terminal,
a service list storing sub-step for storing a list of the searched services as a service list,
a display sub-step for displaying the stored service list on a display screen, and
a rearranging sub-step for rearranging the searched services in the stored service list based on the priority setting signal when receiving the priority setting signal and setting priorities of the rearranged services,
wherein the service list storing sub-step, when the searched and stored services are not searched for during another search, retains the services that are not searched for in the service list.

9. A portable-terminal-readable recording medium that stores a program for executing the optimum priority generation method according to any one of claims 5 to 8.
